# EUROPÄISCHE PATENTANMELDUNG

(11) **EP 0 882 679 A1**
(43) Veröffentlichungstag der Anmeldung: **09.12.1998**
(21) Anmeldenummer: 98810463.4
(22) Anmeldetag: 19.05.1998
(51) Int. Cl.: C03B 5/26, C03B 5/033, C03B 5/03, C03B 5/235

(54) **Verfahren und Schmelzofen zum Verglasen von schwermetallhaltigen Reststoffen**

(30) Priorität: 05.06.1997 DE 19723599
(71) Anmelder: ABB RESEARCH LTD., 8050 Zürich (CH)
(72) Erfinder: Mechtersheimer, Günter, Dr., 5200 Brugg (CH)
(74) Vertreter: Pöpper, Evamaria, Dr.

(57) **Zusammenfassung**

Bei einem Verfahren zum Verglasen von schwermetallhaltigen Reststoffen (18) mit einem über 10 Massen-% liegenden Chlorgehalt, insbesondere aus der Rauchgasreinigung, welche in einem Schmelzofen (1) geschmolzen werden, werden im Hauptofen (2) die nicht in die Schmelze einbindbaren Bestandteile in zwei Fraktionen (22,23) getrennt, wobei die erste Fraktion (22) die leicht flüchtigen Komponenten und die zweite Fraktion (23) die salzartigen, schwerer flüchtigen Komponenten enthält, und die erste Fraktion (22) abgedampft, mit dem Abgas (14) aus dem Ofen herausgeführt und als Kondensat (28) gesammelt wird, und die zweite Fraktion (23) als flüssiges Salz von der Oberfläche der Schmelze (4) separiert und über eine in der Aussenwand des Hauptofens (2) seitliche Öffning (16) ausgetragen wird.

## Beschreibung

### Technisches Gebiet

Die Erfindung betrifft ein Verfahren zum Verglasen von schwermetallhaltigen Reststoffen mit einem über 10 Massen-% liegenden Chlorgehalt aus der Rauchgasreinigung, insbesondere von Filterstaub und Rückständen aus der Rauchgaswäsche, bei welchem die Reststoffe in einem Schmelzofen eingeschmolzen und anschliessend ausgetragen werden, wobei zwecks Konditionierung der Schmelze Zuschlagstoffe zugegeben werden können, sowie einen Schmelzofen zur Durchführung des Verfahrens. Ein Verfahren dieser Gattung ist beispielsweise aus der DE 43 40 754 A1 bekannt, und ein Deglor-Ofen ist beispielsweise in EP 0 633 411 A1 beschrieben.

### Stand der Technik

Es ist bekannt, mittels Schmelzverfahren schwermetallhaltige Reststoffe, wie Filterasche aus der Kehrrichtverbrennung, zu behandeln. Bei Temperaturen von ca. 1300 bis 1400 °C werden diese Reststoffe i. a. ohne Zuschlagstoffe in einem elektrischen Schmelzofen eingeschmolzen, aus dem Ofen ausgetragen und dann abgekühlt, so dass ein glasartiger Rückstand entsteht, welcher problemlos deponiert werden kann.

Beim Deglor-Verfahren wird durch eine Heizung auch oberhalb der Schmelze dafür gesorgt, dass aufgrund ausreichend hoher Temperaturen im Gasraum ein wesentlicher Anteil der Schwermetalle abgedampft wird. Das mittels eines Ventilators aus dem Ofen abgezogene Abgas wird abgekühlt und durch einen Schlauchfilter geleitet, in dem die auskondensierten Schwermetalle als Kondensat aufgefangen werden. Dieses Kondensat kann zur Rückgewinnung der Schwermetalle in einer Metallhütte aufbereitet werden. Die geschmolzenen Reststoffe werden über einen gasdichten Syphon aus dem Ofen ausgetragen und dann abgekühlt, dabei entsteht ein glasartiges Produkt. Die Schwermetallabdampfung trägt mit dazu bei, dass die Qualität des Glasproduktes eine Wiederverwertbarkeit erlaubt. Dies macht einen wesentlichen Vorteil des Deglor-Verfahrens gegenüber anderen bekannten Einschmelzverfahren aus, bei denen wegen der fehlenden Heizung im Oberofen kein Abdampfen der Schwermetalle erfolgt.

Das Deglor-Verfahren hat sich bei der Verglasung von Reststoffen mit vergleichsweise kleinem Gehalt an Metallchloriden, Metallsulfaten und Metallsulfiten, wie sie typischerweise im Filterstaub vorliegen, bestens bewährt.

Es fallen aber auch Reststoffe an, bei denen die Filterasche mit dem stark chlorhaltigen Produkt der Rauchgasreinigung versetzt ist. So werden zur Beseitigung von Schwefeldioxid und Salzsäure die Abgase einer Kalkwäsche unterzogen, wobei Calciumverbindungen, insbesondere CaSO₃, Ca SO₄ und CaCl₂, als Nebenprodukte anfallen, die zusammen mit der Filterasche eingeschmolzen und verglast werden sollen. Typischerweise enthält dieses Produkt 10 bis 20 Massen-% Chlor, vorwiegend in Form von CaCl₂. Diese Verbindung weist einen weit über den üblichen Betriebstemperaturen liegenden Siedepunkt (> 1600 °C) auf. Dies hat zur Folge, dass diese Chloride nicht effektiv genug in die Dampfphase überführt werden können. Gleichzeitig kann nur ein geringer Teil an Chlor in das Glas eingebunden werden.

Um diesen stark salzhaltigen Reststoff ebenfalls umweltgerecht einschmelzen zu können, wurde von der Anmelderin ein Verfahren vorgeschlagen, bei welchem den Reststoffen ein alkalischer Zuschlagstoff in Form eines Oxides, Hydroxides oder Carbonates zugegeben wird, wobei nach der Vermischung das stöchiometrische Verhältnis zwischen der Summe der Alkaline und dem Chlor grösser als 0,75, vorzugsweise grösser als 1, beträgt (DE 196 03 365.9). Durch die Beigabe geeigneter alkalihaltiger Additive sowie durch die Gewährleistung einer ausreichend hohen Abgasmenge wird die Abdampfrate der Chloride signifikant erhöht.

Da die Chloride überwiegend als NaCl abdampfen, entsteht nachteilig eine deutlich grössere Menge an Kondensat, bei dem die Schwermetalle nun in einer so verdünnten Form vorliegen, dass sich eine Aufbereitung nicht mehr lohnt.

Ein weiterer Nachteil besteht darin, dass aufgrund der zusätzlich benötigten Additive, der zusätzlichen Abgasmenge sowie der grösseren Menge an abzudampfenden Material der Energiebedarf der Deglor-Anlage steigt.

Die beiden zuletzt genannten Nachteile bestehen auch dann, wenn zur Rauchgasreinigung anstelle von Kalk alkalihaltige Reagenzien, wie beispielsweise NaHCO₃, verwendet werden, wodurch die Zugabe von alkalihaltigen Zuschlagstoffen in den Schmelzofen zwecks Erhöhung der Abdampfrate der Chloride nicht mehr erforderlich ist.

### Darstellung der Erfindung

Die Erfindung versucht, alle diese Nachteile zu vermeiden. Ihr liegt die Aufgabe zugrunde, ein Verfahren und eine Vorrichtung zum Verglasen von schwermetallhaltigen Reststoffen mit hohem Chlorgehalt aus der Rauchgasreinigung der o. b. Art anzugeben, bei denen die Menge der benötigten alkalihaltigen Additive reduziert ist, und der Durchsatz an Reststoffen erhöht werden kann. Ausserdem sollen die benötigte elektrische Leistung und die Abgasmenge reduziert werden, so dass insgesamt niedrigere Betriebskosten anfallen. Zusätzlich soll eine wirtschaftlichere Rückgewinnung von Schwermetallen aus dem Kondensat ermöglicht werden.

Erfindungsgemäss wird dies dadurch erreicht, dass bei einem Verfahren gemäss dem Oberbegriff des Anspruchs 1, im Hauptofen die nicht in die Schmelze einbindbaren Komponenten der Reststoffe in zwei Fraktionen getrennt werden, wobei die erste Fraktion die leicht flüchtigen Komponenten und die zweite Fraktion die salzartigen, schwerer flüchtigen Komponenten enthält, und die erste Fraktion abgedampft, mit dem Abgas aus dem Ofen herausgeführt und als Kondensat gesammelt wird und die zweite Fraktion als flüssiges Salz von der Oberfläche der Schmelze separiert und ausgetragen wird.

Die Erfindung basiert auf der unerwarteten Erkenntnis, dass sich beim Betrieb der Schmelzanlage gemäss DE 196 03 365.9 an der Oberfläche der glasartigen Schmelze eine stabile, dünnflüssige Salzschicht ausbilden kann, die praktisch ausschliesslich aus CaCl₂, NaCl und KCl besteht und insbesondere eine verglichen mit dem Kondensat kleinere Konzentration an Schwermetallen enthält. Gemäss der Erfindung wird nun nicht mehr das gesamte Salz zusammen mit den anderen flüchtigen Bestandteilen des Reststoffes abgedampft.

Erfindungsgemäss wird dies bei einem Schmelzofen zur Durchführung des Verfahrens gemäss Oberbegriff des Anspruches 8 dadurch erreicht, dass in der Aussenwand des Hauptofens ein seitlicher Auslauf für das auf der Glasschmelze schwimmende Salz vorgesehen ist. Die Unterkante dieser seitlichen Öffnung ist in einer Höhe von ca. 1 bis 10 cm oberhalb des durch den Auslaufstein bestimmten Schmelzniveaus angeordnet.

Die Vorteile der Erfindung bestehen unter anderem darin, dass das Kondensat so stark mit Schwermetallen angereichert ist, dass sich eine Aufarbeitung zwecks Schwermetallrückgewinnung wieder lohnt. Gegenüber dem bekannten Stand der Technik kann ausserdem die Menge an alkalihaltigen Zuschlagstoffe verringert werden, und die Ofentemperatur kann gesenkt werden, so dass einerseits die Lebensdauer der Ofenteile verlängert wird und andererseits die benötigte elektrische Leistung reduziert werden kann. Es kommt zu einer signifikanten Erhöhung des Durchsatzes an Reststoff, so dass insgesamt die Betriebskosten der Anlage verringert werden.

Es ist besonders zweckmässig, wenn ein Massenverhältnis zwischen der ersten Fraktion, d.h. dem Kondensat, und der zweiten Fraktion, d.h. dem flüssigen Salz, eingestellt wird, welches in Abhängigkeit von der Zusammensetzung des Reststoffes im Bereich von 0,1 bis 10 liegt. Die Grösse des Massenverhältnisses zwischen der ersten und der zweiten Fraktion wird durch die Wahl der Prozessparameter, vorzugsweise Temperatur, Abgasmenge und Menge an alkalihaltigen Additiven, eingestellt. Wichtig ist, dass die Abdampfung des Salzes, d.h. der zweiten Fraktion, eingeschränkt wird. Dies geschieht beispielsweise dadurch, dass die Menge an Abgas und/oder die Temperatur oberhalb der Schmelze bzw. die Menge an alkalihaltigen Additiven reduziert werden.

Schliesslich wird mit Vorteil für die sich an der Oberfläche der Schmelze im Hauptofen befindende zweite Fraktion eine Dicke grösser als 1 cm, vorzugsweise 3 bis 10 cm, eingestellt. Dadurch wird eine saubere Abtrennung der Salzschicht von der darunterliegenden Glasschmelze gewährleistet. Dabei sind Schichtdicken im oberen Bereich dann vorteilhaft, wenn die Reststoffe mit hohen Förderraten in den Schmelzofen eingespeist werden.

Weiterhin ist es zweckmässig, wenn die in den Hauptofen zwecks Regelung der Abgasmenge aus dem Ofen zusätzlich eingebrachte Luft vor Eintritt in den Hauptofen durch das aus dem Hauptofen fliessende flüssige Salz vorgewärmt wird. Durch die Menge der Zuluft wird die Abgasmenge aus dem Ofen eingestellt und somit der Anteil der abgedampften Komponenten mitbestimmt.

Ausserdem ist es vorteilhaft, wenn im Schmelzofen die Öffnung für den Salzaustrag nahe der Trennwand zwischen Haupt- und Austragsofen angeordnet ist. Damit wird verhindert, dass das ausgetragene Salz durch ungeschmolzenen Reststoff verunreinigt ist.

Schliesslich ist es von Vorteil, wenn die Öffnung für den Salzaustrag gleichzeitig für die Zudosierung der Zuluft vorgesehen ist, weil so auf einfache Weise das heisse ausfliessende Salz zur Vorheizung der Zuluft verwendet werden kann.

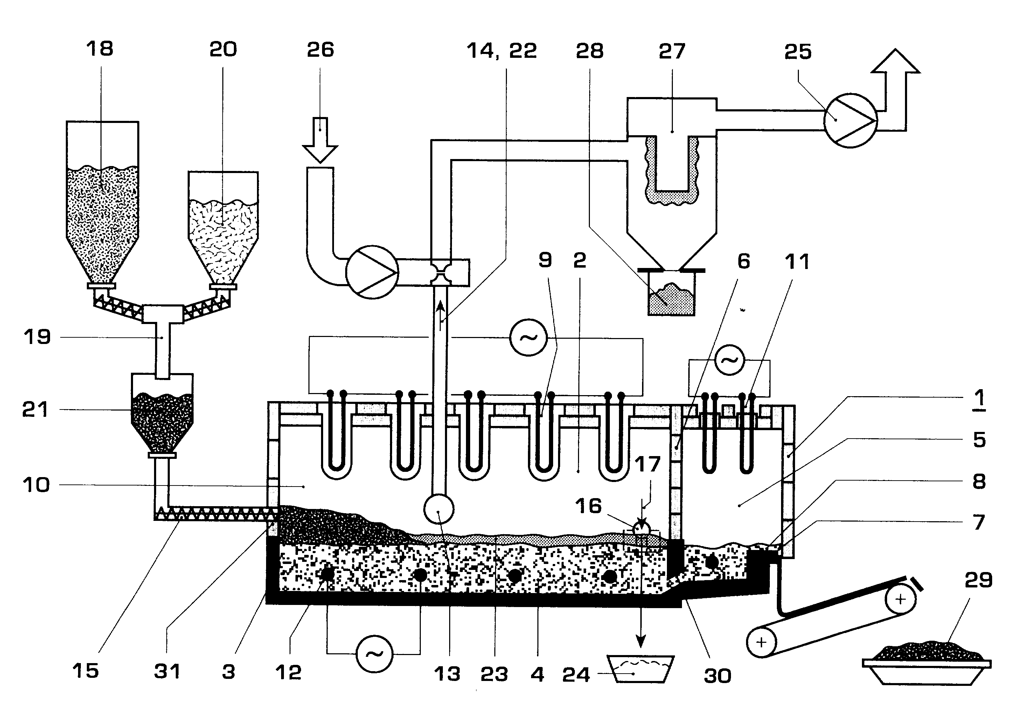

### Kurze Beschreibung der Zeichnung

In der Zeichnung ist ein Ausführungsbeispiel der Erfindung anhand eines Deglor-Ofens für eine Kehrrichtverbrennungsanlage dargestellt.

Die einzige Figur zeigt eine schematische Darstellung des Ofens und der vor-bzw. nachgeschalteten Aggregate.

Es sind nur die für das Verständnis der Erfindung wesentlichen Elemente gezeigt.

### Weg zur Ausführung der Erfindung

Nachfolgend wird die Erfindung anhand eines Ausführungsbeispieles und der einzigen Figur näher erläutert.

Die Figur zeigt schematisch einen Schmelzofen 1, der aus einem Hauptofen 2 mit einer im unteren Teil sich befindenden Schmelzwanne 3 zur Aufnahme der Schmelze 4 und aus einem Austragsofen 5 besteht. Der Austragsofen 5 ist mit der Schmelzwanne 3 über einen Syphon 30 verbunden und mittels einer Trennwand 6 vom Hauptofen 2 getrennt. An der dem Syphon 30 gegenüberliegenden Wand des Austragsofens 5 ist ein Überlauf als Austragsvorrichtung 7 mit einem Auslaufstein 8 zum Austrag der Glasschmelze 4 angeordnet. Eine erste Heizvorrichtung in Form von elektrischen Heizelementen 9, welche von keramischen Schutzrohren umgeben sind, ragt von oben her in den Gasraum 10 des Hauptofens 2 hinein, ohne in die Schmelze 4 hineinzutauchen. Eine zweite Heizvorrichtung in Form von elektrischen Heizelementen 11 ragt ebenfalls von oben her in den Austragsofen 5, ohne die Schmelze 4 zu berühren. Im Bereich vor, im und nach dem Syphon 30 sind dritte Heizelemente in Form von Badelektroden 12 vorgesehen, die stets von der Schmelze 4 bedeckt sind und auch dafür sorgen, dass sich der Durchlass des Syphons 30 während des Betriebes des Schmelzofens 1 nicht zusetzt. Im Hauptofen 2 ist ausserdem eine Entnahmevorrichtung 13 für das Abgas 14 vorgesehen. Zur Einbringung der zu behandelnden Reststoffe in den Hauptofen 2 ist in der Stirnwand des Hauptofens 2 ein Einlass 31 angeordnet, der sich oberhalb des Niveaus der Schmelze 4 befindet. Die Zufuhr erfolgt mittels einer Beschickungsvorrichtung 15, beispielsweise einer Förderschnecke.

Ein derartiger Schmelzofen ist Gegenstand des EP 0 633 441 A1, auf welche hiermit zwecks Vermeidung von Wiederholungen ausdrücklich Bezug genommen wird.

Erfindungsgemäss ist in der Aussenwand des Hauptofens 2 eine seitlich Öffnung 16 angeordnet, welche für einen noch zu beschreibenden Salzaustrag vorgesehen ist. Die Unterseite der Öffnung 16 befindet sich in einer Höhe von ca. 1 bis 10 cm oberhalb des Niveaus des Schmelzspiegels, der beim Betrieb des Ofens ohne Salzschicht entsteht. Dieser Schmelzspiegel liegt etwa auf der Höhe des Auslaufsteines 8. Die Öffnung 16 kann neben dem Salzaustrag auch gleichzeitig für die Zudosierung von Zuluft 17 verwendet werden.

Schwermetallhaltige Reststoffe 18 aus der Rauchgasreinigung von Kehrrichtverbrennungsanlagen mit typischerweise 10 bis 20 Massen-% oder sogar noch höherem Gehalt an Chlor, wie Filterasche, werden in einem Mischer 19 mit Zuschlagstoffen 20 in Form eines Oxides, Hydroxides oder Carbonates gemischt und anschliessend in einem Zwischensilo 21 zwischengelagert. Mittels einer Eintragsvorrichtung 15 wird das Gemisch in den Hauptofen 2 des Schmelzofens 1 eingebracht und geschmolzen.

Die Additive werden im wesentlichen dazu benötigt, um aus dem Reststoff 18 ein gut schmelzbares und stabiles Glas herzustellen. Da mit der Erfindung nun nicht mehr alle chlorhaltigen Bestandteile der Reststoffe mehr abgedampft werden müssen, sind die alhalihaltigen Zuschlagstoffe gemäss DE 196 03 365.9 nicht mehr erforderlich bzw. können in erheblich kleinerer Dosierung verwendet werden.

Durch Wahl der Prozessparameter, insbesondere Temperatur, Menge an Abgas und Menge an alkalihaltigen Additiven, kann der Anteil an flüchtigen Komponenten, die abgedampft und als Kondensat gesammelt werden, insbesondere Schwermetallchloride, (erste Fraktion 22) und der Anteil an salzartigen Komponenten, welche als flüssiges Salz 23 (zweite Fraktion) von der Schmelze 4 separiert und durch die Öffnung 16 entweder kontinuierlich oder batchweise ausgetragen und in einem Behälter 24 gesammelt werden, eingestellt werden. Die zweite Fraktion 23 enthält die schwerer flüchtigen Komponenten, insbesondere CaCl₂, NaCl und KCl.

Die Schmelze 4 wird kontinuierlich oder intermittierend aus dem Austragsofen 5 abgezogen und als glasartiges Produkt 29 deponiert oder weiterverarbeitet.

Die Abgase 14 des Schmelzofens einschliesslich der abgedampften ersten Fraktion 22 werden mittels eines Ventilators 25 aus dem Schmelzofen abgesaugt und mit Kaltluft 26 gekühlt (gequencht). Dadurch kondensieren und desublimieren die Schwermetallverbindungen aus dem Gas und können in einem nachgeschalteten Filter, z.B. Schlauchfilter 27, als Kondensat 28 abgeschieden und später weiterverarbeitet werden. Die gefilterte Luft kann beispielsweise zur Kehrrichtverbrennungsanlage zurückgeführt werden.

Auf Grund der unterschiedlichen Verdampfungscharakteristik zwischen den beiden Fraktionen 22 und 23 erfolgt eine Separation der i.a. leicht flüchtigeren Schwermetalle, wie Pb, die ins Kondensat 28 gehen, von den überwiegend als Salz auszutragenden schwer flüchtigen NaCl, KCl und CaCl₂. Das Kondensat 28 wird nun so stark mit Schwermetallen angereichert, dass sich eine Aufarbeitung zwecks Schwermetallrückgewinnung wieder lohnt.

Je nach Zusammensetzung des Reststoffes 18 sollte das Massenverhältnis von Kondensat 28 und flüssigem Salz 23 zwischen 0,1 und 10 liegen.

Wichtig ist, dass die Abdampfung des Salzes eingeschränkt wird, so dass die Dikke der Salzschicht 23 bei kontinuierlicher Förderung des Reststoffes 18 ohne weitere Massnahmen mit der Zeit anwachsen würde. Das kann man durch Reduktion der Abgasmenge und/oder der Temperatur oberhalb der Schmelze oder durch Reduktion der Menge an alkalihaltigen Additiven erreichen. Dabei ist es aber wichtig, dass die Temperatur im Ofen hoch genug bleibt, um einerseits zu verhindern, dass aufgrund zu kleiner Schmelzrate ungeschmolzene Einsatzstoffe die Oberfläche nahe der Öffnung 16 bedecken, sowie um andererseits eine ausreichende Verdampfung der Schwermetalle zu garantieren. Hierzu sind Temperaturen oberhalb von 1200°C notwendig. Daher ist eine Heizung im Oberofen unerlässlich.

Durch kontinuierlichen oder batchweisen Austrag von flüssigem Salz wird nun dafür gesorgt, dass die Dicke der Salzschicht 23 bei kontinuierlicher Förderung der Reststoffe 18 im zeitlichen Mittel konstant bleibt. Die Dicke der Salzschicht 23 sollte grösser als 1 cm sein, um eine saubere Abtrennung von der darunterliegenden Glasschmelze 4 zu gewährleisten. Vorzugsweise sind Schichtdicken zwischen 3 und 10 cm anzustreben. Grössere Werte sind insbesondere dann von Vorteil, wenn die Reststoffe 18 mit hohen Förderraten in den Schmelzofen 1 eingespeist werden.

Aufgrund des niedrigen Schmelzpunktes und der niedrigen Viskosität umfliesst das geschmolzene Salz 23 den eingetragenen Reststoff 18 sehr effektiv. Dies erhöht den Wärmeübergang und sorgt dafür, dass der eingetragene Reststoff 18 schneller aufschmilzt. Dadurch wird vermieden, dass sich bei hohen Förderraten ein Berg von noch ungeschmolzenem Reststoff 18 bildet, der bei Kontakt die Heizelemente 9 im Oberofen zerstören würde.

Wenn sich an der Oberfläche der Glasschmelze 4 die Salzschicht 23 aufbaut, steigt aufgrund der verglichen mit der Glasschmelze kleineren Dichte der Schmelzspiegel im Hauptofen 2 an. Die seitliche Öffnung 16 bildet nun einen Überlauf für das an der Oberfläche der Schmelze 4 schwimmenden Salz 23, das in einem seitlich angebrachten Behälter 24 aufgefangen werden kann. Auf diese Weise ist ein kontinuierlicher Betrieb der Anlage möglich. Damit das ausgetragenen Salz nicht durch ungeschmolzene Reststoffe 18 verunreinigt wird, ist es zweckmässig, die Öffnung 16 für den Salzaustrag nahe der Trennwand 6 zwischen dem Hauptofen 2 und dem Austragsofen 5 anzuordnen.

Die Öffnung 16 kann gleichzeitig zur Zudosierung von Zuluft 17 in den Hauptofen verwendet werden. Durch die Menge an Zuluft 17 wird die Menge an Abgas 14 aus dem Ofen eingestellt und somit der Anteil der abgedampften Komponenten mitbestimmt. Günstig ist, wenn das aus der Öffnung 16 ausfliessende heisse Salz 23 zur Vorheizung der Zuluft 17 verwendet wird.

Beim Betrieb einer Deglor-Anlage mit einem typischen Reststoff, der aus einem Gemisch von Filterasche und Produkt der trockenen Rauchgasreinigung einer Kehrrichtverbrennungsanlage besteht, können, falls 70 % der Chloride als flüssiges Salz ausgetragen werden, mit dem erfindungsgemässen Verfahren gegenüber dem aus DE 196 03 365.9 bekannten Verfahren folgende Vorteile erreicht werden:
- Reduktion der Menge an benötigten Additiven um ca. 60 %,
- signifikante Durchsatzerhöhung an Reststoff (mind. 30 %) bzw. kompaktere Bauweise des Schmelzofens,
- Reduktion der benötigten elektrischen Leistung um 30 %,
- Reduktion der Abgasmenge um 40 %,
- Erniedrigung der Ofentemperatur um mehr als 50 °C,
- Senkung der Betriebskosten,
- wirtschaftlichere Rückgewinnung von Schwermetallen aus dem Kondensat.

### Bezugszeichenliste

- 1: Schmelzofen
- 2: Hauptofen
- 3: Schmelzwanne
- 4: Schmelze
- 5: Austragsofen
- 6: Trennwand
- 7: Austragsvorrichtung für Pos. 4
- 8: Auslaufstein
- 9: elektrisches Heizelement mit keramischen Schutzrohr für Pos. 2
- 10: Gasraum von Pos. 2
- 11: elektrisches Heizelement für Pos. 5
- 12: Badelektroden
- 13: Entnahmevorrichtung für Pos. 14
- 14: Abgas
- 15: Beschickungsvorrichtung
- 16: Öffnung für Salzaustrag
- 17: Zuluft
- 18: Reststoffe
- 19: Mischereinrichtung
- 20: Zuschlagstoffe
- 21: Zwischensilo
- 22: erste Fraktion (flüchtige Komponenten)
- 23: zweite Fraktion (flüssiges Salz)
- 24: Behälter für Pos. 23
- 25: Ventilator
- 26: Kaltluft
- 27: Filter
- 28: Kondensat
- 29: Glas
- 30: Syphon
- 31: Einlass in Pos. 2

## Patentansprüche

1. Verfahren zum Verglasen von schwermetallhaltigen Reststoffen (18) mit einem über 10 Massen-% liegenden Chlorgehalt, bei welchem die Reststoffe (18) in einem aus einem Haupt-(2) und einem Austragsofen (5) bestehenden Schmelzofen (1) mit Oberheizung zu einer Schmelze (4) eingeschmolzen und anschliessend ausgetragen werden, dadurch gekennzeichnet, dass im Hauptofen (2) die nicht in die Schmelze (4) einbindbaren Komponenten der Reststoffe (18) in zwei Fraktionen (22, 23) getrennt werden, wobei die erste Fraktion (22) die leicht flüchtigen Komponenten, insbesondere die Schwermetalle, enthält und die zweite Fraktion (23) die salzartigen, schwerer flüchtigen Komponenten enthält, und die erste Fraktion (22) abgedampft, mit dem Abgas (14) aus dem Ofen herausgeführt und als Kondensat (28) gesammelt wird, und die zweite Fraktion (23) als flüssiges schwermetallarmes Salz von der Oberfläche der Schmelze (4) separiert und ausgetragen wird.

2. Verfahren nach Anspruch 1, dadurch gekennzeichnet, dass ein Massenverhältnis zwischen der ersten Fraktion (22) und der zweiten Fraktion (23) eingestellt wird, welches in Abhängigkeit von der Zusammensetzung des Reststoffes (18) im Bereich von 0,1 bis 10 liegt.

3. Verfahren nach Anspruch 1 und 2, dadurch gekennzeichnet, dass die Grösse des Massenverhältnisses zwischen der ersten und der zweiten Fraktion (22, 23) durch die Wahl der Prozessparameter, vorzugsweise Temperatur, Abgasmenge und Menge an alkalihaltigen Additiven, eingestellt wird.

4. Verfahren nach einem der Ansprüche 1 bis 3, dadurch gekennzeichnet, dass für die sich an der Oberfläche der Schmelze (4) im Hauptofen (2) befindende zweite Fraktion (23) eine Dicke grösser als 1 cm eingestellt wird.

5. Verfahren nach Anspruch 4, dadurch gekennzeichnet, dass die Dicke der zweiten Fraktion (23) im Bereich von 3 bis 10 cm eingestellt wird.

6. Verfahren nach einem der Ansprüche 1 bis 5, dadurch gekennzeichnet, dass in den Hauptofen (2) zwecks Regelung der Abgasmenge aus dem Ofen Zuluft (17) eingebracht wird.

7. Verfahren nach Anspruch 6, dadurch gekennzeichnet, dass die Zuluft (17) vor Eintritt in den Hauptofen (2) durch das aus dem Hauptofen (2) fliessende flüssige Salz (23) vorgewärmt wird.

8. Schmelzofen (1) zur Durchführung des Verfahrens nach einem der Ansprüche 1 bis 7, umfassend einen Hauptofen (2) mit einer Schmelzwanne (3) zur Aufnahme einer Schmelze (4), mindestens eine Beschickungsvorrichtung (15) für die Zufuhr der zu behandelnden Reststoffe (18) und der Zuschlagstoffe (20), mindestens einen von der Beschickungsvorrichtung (15) räumlich distanzierten Austragsofen (5), der mit der Schmelzwanne (4) über einen Syphon (30) verbunden ist und mittels einer Trennwand (6) vom Hauptofen (2) getrennt ist, mindestens eine in den Hauptofen (2) hineinragende erste Heizvorrichtung (9), mindestens eine in den Austragsofen (5) hineinragende zweite Heizvorrichtung (11) sowie jeweils mindestens eine in der Schmelze (4) im Hauptofen (2) und im Austragsofen (5) angeordnete dritte Heizvorrichtung (12) in Form von Badelektroden, und mindestens eine Entnahmevorrichtung (13) für das Abgas (14), sowie mindestens eine im Austragsofen (5) angeordnete Austragsvorrichtung (7) mit Auslaufstein (8), dadurch gekennzeichnet, dass in der Aussenwand des Hauptofens (2) eine seitliche Öffnung (16) für einen Salzaustrag vorgesehen ist, deren Unterkante in einer Höhe von ca. 1 bis 10 cm oberhalb des durch den Auslaufstein (8) bestimmten Schmelzniveaus angeordnet ist.

9. Schmelzofen nach Anspruch 8, dadurch gekennzeichnet, dass die Öffnung (16) nahe der Trennwand (6) zwischen Haupt- (2) und Austragsofen (5) angeordnet ist.

10. Schmelzofen nach Anspruch 8 oder 9, dadurch gekennzeichnet, dass die Öffnung (16) für den Salzaustrag gleichzeitig für die Zudosierung der Zuluft (17) vorgesehen ist.
